# EUROPEAN PATENT APPLICATION

(11) **EP 4 723 288 A1**
(43) Date of publication of application: **08.04.2026**
(21) Application number: 24815290.2
(22) Date of filing: 21.05.2024
(51) Int. Cl.: H01M 10/0587, H01M 4/13, H01M 50/56, H01M 50/107, H01M 50/531, H01M 50/545, H01M 50/586, H01M 50/595

(54) **NON-AQUEOUS ELECTROLYTE SECONDARY BATTERY**

(30) Priority: 31.05.2023 JP 2023090155
(71) Applicant: Panasonic Intellectual Property Management Co., Ltd., Kadoma-shi, Osaka 571-0057 (JP)
(72) Inventor: MORI, Shinya, Osaka 571-0057 (JP)
(74) Representative: Eisenführ Speiser
(86) International application number: PCT/JP2024/018629
(87) International publication number: WO 2024/247806

(57) **Abstract**

A disclosed cylindrical non-aqueous electrolyte secondary battery includes: an electrode group formed by spirally winding a positive electrode, a negative electrode, and a separator; a non-aqueous electrolyte; an outer casing can; a positive electrode lead; and a negative electrode lead. One end of the negative electrode lead is connected to a first negative electrode current collector exposed portion in which no negative electrode material mixture layer is provided. Another end of the negative electrode lead is electrically connected to the outer casing can. A second negative electrode current collector exposed portion provided in at least a portion of an outermost circumference of the negative electrode is in contact with an inner surface of the outer casing can. In a stretched-out state of the electrode group, the negative electrode lead is provided at a position between a first position of the negative electrode that faces a winding start end of the positive electrode and a second position of the negative electrode that faces the positive electrode lead. The positive electrode includes a notch at each of two positions that face the negative electrode lead across the separator. A thickness Td of the negative electrode lead is larger than a thickness Tn of the negative electrode.

## Description

### [Technical Field]

The present disclosure relates to a non-aqueous electrolyte secondary battery.

### [Background Art]

Non-aqueous electrolyte secondary batteries are used in various types of applications. In a secondary battery, a positive electrode and a positive electrode terminal are connected using a positive electrode lead, and a negative electrode and a negative electrode terminal are connected using a negative electrode lead.

PTL 1 (Japanese Laid-Open Patent Publication No. 2013-62137) discloses, in claim 1, "an electrode assembly for a secondary battery including a plurality of layers including a positive electrode sheet on which a positive electrode active material is applied, a negative electrode sheet on which a negative electrode active material is applied, and a separator provided between the positive electrode sheet and the negative electrode sheet, wherein a positive electrode notch and a non-positive electrode active material application portion are formed on one end side of the positive electrode sheet, a negative electrode notch is formed at an overlapping position with the non-positive electrode active material application portion of the positive electrode sheet and a non-negative electrode active material application portion is formed at an overlapping position with the positive electrode notch on one end side of the negative electrode sheet, a separator notch is formed at an overlapping position with the positive electrode notch and the negative electrode notch on one end side of the separator, the positive electrode sheet is configured such that the non-positive electrode active material application portion can be joined directly to a positive electrode terminal connecting member, and the negative electrode sheet is configured such that the non-negative electrode active material application portion can be joined directly to a negative electrode terminal connecting member".

PTL 2 (Japanese Laid-Open Patent Publication No. 2017-69207) discloses, in claim 1, "a lithium ion secondary battery including an electrode stack formed by alternately stacking a positive electrode and a negative electrode with an insulating member interposed therebetween, each of the positive electrode and the negative electrode including an electrode active material layer formed by applying an active material on a surface of a current collector while leaving a non-active material application portion, wherein one of the positive electrode and the negative electrode is configured such that the non-active material application portion is provided at a position that is one end side of the current collector in a length direction that extends in one direction of the current collector and in a portion of the current collector in a width direction perpendicular to the length direction as viewed in a plan view, and the non-active material application portion functions as a terminal lead".

### [Citation List]

### [Patent Literature]

PTL 1: Japanese Laid-Open Patent Publication No. 2013-62137
PTL 2: Japanese Laid-Open Patent Publication No. 2017-69207

### [Summary of Invention]

### [Technical Problem]

The patent literature documents mentioned above disclose stacked-type electrode groups. On the other hand, spirally wound-type electrode groups have unique problems that are different from stacked-type electrode groups. It is an object of the present disclosure to provide a non-aqueous electrolyte secondary battery that can reduce the occurrence of winding misalignment of a spirally wound-type electrode group and has a low internal resistance.

### [Solution to Problem]

One aspect of the present disclosure relates to a non-aqueous electrolyte secondary battery. The non-aqueous electrolyte secondary battery is a cylindrical non-aqueous electrolyte secondary battery including: an electrode group formed by spirally winding a positive electrode, a negative electrode, and a separator; a non-aqueous electrolyte; a cylindrical outer casing can that houses the electrode group and the non-aqueous electrolyte; a positive electrode lead; and a negative electrode lead, wherein the positive electrode includes a positive electrode current collector and a positive electrode material mixture layer provided on the positive electrode current collector, the negative electrode includes a negative electrode current collector and a negative electrode material mixture layer provided on the negative electrode current collector, one end of the positive electrode lead is connected to a positive electrode current collector exposed portion of the positive electrode current collector in which the positive electrode material mixture layer is not provided, another end of the positive electrode lead protrudes from one end of the electrode group in an axial direction of the electrode group and is electrically connected to a positive electrode terminal, one end of the negative electrode lead is connected to a first negative electrode current collector exposed portion of the negative electrode current collector in which the negative electrode material mixture layer is not provided, another end of the negative electrode lead protrudes from another end of the electrode group in the axial direction and is electrically connected to the outer casing can, the negative electrode includes a second negative electrode current collector exposed portion in at least a portion of an outermost circumference of the negative electrode, the second negative electrode current collector exposed portion is in contact with an inner surface of the outer casing can, in a stretched-out state of the electrode group, the negative electrode lead is provided at a position between a first position of the negative electrode and a second position of the negative electrode in a lengthwise direction of the negative electrode, the first position being a position that faces a winding start end of the positive electrode across the separator, and the second position being a position that faces the positive electrode lead across the separator, the positive electrode includes a notch at each of two positions that face the negative electrode lead across the separator, and a thickness Td of the negative electrode lead is larger than a thickness Tn of the negative electrode.

### [Advantageous Effects of Invention]

According to the present disclosure, it is possible to obtain a non-aqueous electrolyte secondary battery that can reduce the occurrence of winding misalignment of a spirally wound-type electrode group and has a low internal resistance.

Novel features of the present invention are set forth in the appended claims. However, the present invention will be well understood from the following detailed description of the present invention with reference to the drawings, in terms of both the configuration and the content together with other objects and features of the present invention.

### [Brief Description of Drawings]

FIG. 1 is a cross-sectional view schematically showing one example of a non-aqueous electrolyte secondary battery according to the present disclosure.
FIG. 2A is a top view illustrating an example of a positive electrode and a negative electrode of the non-aqueous electrolyte secondary battery according to the present disclosure.
FIG. 2B is a schematic diagram illustrating an example of a position and a size of a notch formed in the positive electrode of the non-aqueous electrolyte secondary battery according to the present disclosure.
FIG. 3 is a cross-sectional view illustrating the example of the positive electrode and the negative electrode of the non-aqueous electrolyte secondary battery according to the present disclosure.

### [Description of Embodiments]

Hereinafter, an embodiment according to the present disclosure will be described by way of examples. However, the present disclosure is not limited to the examples described below. In the following description, specific numerical values and materials may be listed as examples. However, other numerical values and materials may also be used as long as the advantageous effects of the present disclosure can be obtained. In the specification of the present application, the expression "a range of a numerical value A to a numerical value B" encompasses the range including the numerical value A and the numerical value B, and can also be interpreted as "a numerical value A or more and a numerical value B or less". In the following description, when lower and upper limits of numerical values of specific physical properties, conditions, and the like are shown as examples, any of the lower limits and any of the upper limits can be combined in any way as long as the lower limits are not greater than or equal to the upper limits.

### (Non-aqueous Electrolyte Secondary Battery)

Hereinafter, a non-aqueous electrolyte secondary battery according to the present embodiment may also be referred to as "non-aqueous electrolyte secondary battery (B)" or "secondary battery (B)". The secondary battery (B) is a cylindrical non-aqueous electrolyte secondary battery. The secondary battery (B) includes: an electrode group formed by spirally winding a positive electrode, a negative electrode, and a separator; a non-aqueous electrolyte; a cylindrical outer casing can that houses the electrode group and the non-aqueous electrolyte; a positive electrode lead; and a negative electrode lead. The positive electrode includes a positive electrode current collector and a positive electrode material mixture layer provided on the positive electrode current collector. The negative electrode includes a negative electrode current collector and a negative electrode material mixture layer provided on the negative electrode current collector. One end of the positive electrode lead is connected to a positive electrode current collector exposed portion of the positive electrode current collector in which the positive electrode material mixture layer is not provided. Another end of the positive electrode lead protrudes from one end of the electrode group in an axial direction of the electrode group and is electrically connected to a positive electrode terminal. One end of the negative electrode lead is connected to a first negative electrode current collector exposed portion of the negative electrode current collector in which the negative electrode material mixture layer is not provided. Another end of the negative electrode lead protrudes from another end of the electrode group in the axial direction and is electrically connected to the outer casing can. The negative electrode includes a second negative electrode current collector exposed portion in at least a portion of an outermost circumference of the negative electrode. The second negative electrode current collector exposed portion is in contact with an inner surface of the outer casing can. In a stretched-out state of the electrode group, the negative electrode lead is provided at a position between a first position of the negative electrode and a second position of the negative electrode in a lengthwise direction of the negative electrode, the first position being a position that faces a winding start end of the positive electrode across the separator, and the second position being a position that faces the positive electrode lead across the separator. The positive electrode includes a notch at each of two positions that face the negative electrode lead across the separator. A thickness Td of the negative electrode lead is larger than a thickness Tn of the negative electrode.

In an ordinary spirally wound-type secondary battery, a problem such as misalignment of electrode plates during winding is likely to occur when a thick negative electrode lead is used. For this reason, in the ordinary secondary battery, a negative electrode lead that is thinner than the negative electrode is used. Furthermore, in the ordinary spirally wound-type secondary battery, when the negative electrode lead is connected only to a portion of the negative electrode in a width direction of the negative electrode, the electrode plates are inclined within the electrode group, which is likely to cause a problem such as misalignment of the electrode plates during winding. In the secondary battery (B), the negative electrode lead is made thicker than that of an ordinary secondary battery. Furthermore, in the secondary battery (B), the negative electrode and the outer casing can (negative electrode terminal) are connected by the negative electrode lead and the second negative electrode current collector exposed portion. With this configuration, the internal resistance of the secondary battery (B) can be reduced significantly. In the secondary battery (B), two notches are formed in the positive electrode. Accordingly, even when the negative electrode lead is thick or the negative electrode lead is connected only to a portion of the negative electrode in the width direction of the negative electrode, the winding misalignment can be prevented. As described above, the secondary battery (B) can reduce the occurrence of winding misalignment of a spirally wound-type electrode group and has a low internal resistance.

The position and size of each notch are set such that the negative electrode lead does not overlap the positive electrode (a portion of the positive electrode other than the notch) when viewed from a radial direction of the electrode group (when viewed in a see-through manner from the radial direction of the electrode group).

In the secondary battery (B), a ratio Lp1/Lp that is the ratio of a length Lp in a lengthwise direction of the positive electrode and a distance Lp1 from a winding start end of the positive electrode to the positive electrode lead may be within a range of 0.4 to 0.6. Here, each of the length Lp and the distance Lp1 corresponds to a length that extends along a circumferential direction of the electrode group, or in other words, a length of the electrode group in a stretched-out state. When the ratio Lp1/Lp is within the range of 0.4 to 0.6, it means that the positive electrode lead is connected near a center of the positive electrode in the lengthwise direction of the positive electrode. With this configuration, the resistance in the positive electrode can be reduced.

In the secondary battery (B), a ratio D/Ln1 that is the ratio of a distance Ln1 between the first position and the second position and a distance D between the first position and the negative electrode lead may be 0.35 or more or 0.50 or more, and may be 0.95 or less or 0.80 or less. For example, the ratio D/Ln1 may be within a range of 0.35 to 0.95 (for example, within a range of 0.50 to 0.80). With this configuration, the internal resistance of the negative electrode can be particularly reduced. In this configuration, the negative electrode lead may be provided on an inner circumferential side relative to the positive electrode lead. Each of the distance Ln1 and the distance D corresponds to a length that extends along the circumferential direction, or in other words, the length of the electrode group in a stretched-out state. The distance Ln1 is substantially equal to the distance Lp1.

The secondary battery (B) may further include a protection tape that is attached to the negative electrode to cover the negative electrode lead. In this case, a portion of the negative electrode lead is provided between the negative electrode current collector and the protection tape. For example, a portion of the negative electrode lead that is joined to the negative electrode current collector may be provided between the negative electrode current collector and the protection tape. As the protection tape, an insulation tape can be used. There is no particular limitation on the protection tape, and a known protection tape used as a protection tape (insulation tape) for an electrode group for a non-aqueous electrolyte secondary battery may be used. As the protection tape, a protection tape that includes an insulating resin layer (for example, a layer made of a polyolefin such as polypropylene) may be used. The protection tape is preferably as thin as possible as long as the protection tape can ensure its function. The protection tape may have a thickness of 10 µm or more or 15 µm or more, and 30 µm or less or 20 µm or less.

In the secondary battery (B), it is preferable that the following conditions (1) and/or (2) are satisfied. The terms "positive electrode thickness Tp" and "negative electrode thickness Tn" used herein each refer to the thickness of a portion where a material mixture layer is formed on both sides.
(1) The positive electrode thickness Tp, the negative electrode thickness Tn, and the negative electrode lead thickness Td satisfy Td < (2Tp + Tn).
(2) A ratio Td/Tn that is the ratio of the negative electrode lead thickness Td relative to the negative electrode thickness Tn is within a range of 2 to 5.

By satisfying the configuration (1) above, the winding misalignment of the electrode group can be particularly reduced. By setting the ratio Td/Tn to be 2 or more, the resistance in the negative electrode can be particularly reduced.

The negative electrode current collector may be bent such that the first negative electrode current collector exposed portion protrudes toward the side opposite to the side where the negative electrode lead is provided. For example, in a cross section X of the electrode group of the secondary battery (B), the first negative electrode current collector exposed portion may be bent such that both sides of the negative electrode lead respectively protrude from both sides of the negative electrode. With this configuration, it is possible to prevent one side of the negative electrode lead from protruding excessively. Accordingly, the winding misalignment of the electrode group can be particularly reduced. As used herein, the term "cross section X" refers to a cross section that passes through the notches of the positive electrode and the negative electrode lead and is perpendicular to the axial direction of the electrode group. In the cross section X of the electrode group of the secondary battery (B), it is preferable that both sides of the negative electrode lead do not protrude beyond the adjacent notches of the positive electrode. Furthermore, in the cross section X, it is preferable that the negative electrode current collector and the protection tape that enclose the negative electrode lead do not protrude beyond the adjacent notches of the positive electrode.

In the cross section X, the first negative electrode current collector exposed portion may be bent such that a center of the negative electrode lead in the thickness direction is located in a region when it is assumed that the negative electrode material mixture layer is formed on the first negative electrode current collector exposed portion. With this configuration, it is possible to prevent one side of the negative electrode lead from protruding excessively. Accordingly, the winding misalignment of the electrode group can be particularly reduced.

The negative electrode material mixture layer is formed on each side of the negative electrode current collector. The thickness of the negative electrode current collector may be 5 µm or more or 10 µm or more, and may be 50 µm or less or 30 µm or less. The negative electrode thickness Tn may be 100 µm or more or 150 µm or more, and may be 300 µm or less or 200 µm or less.

There is no particular limitation on the material for the negative electrode lead, and a known material used as the material for the negative electrode lead may be used. For example, as the material for the negative electrode lead, a metal can be used, and a clad material composed of a plurality of metal layers may also be used. For example, a clad material with a stacked structure including a nickel layer, a copper layer, and a nickel layer may also be used. The negative electrode lead thickness Td may be 120 µm or more or 200 µm or more, and may be 500 µm or less or 300 µm or less.

The positive electrode thickness Tp may be 100 µm or more or 120 µm or more, and may be 300 µm or less or 180 µm or less.

A ratio Lpd/Wp that is the ratio of a length Lpd of a portion of the positive electrode lead that is in contact with the positive electrode current collector relative to a width Wp of the positive electrode may be within a range of 0.05 to 1.0 (for example, within a range of 0.1 to 0.5 or within a range of 0.2 to 0.5). A ratio Lnd/Wn that is the ratio of a length Lnd of a portion of the negative electrode lead that is in contact with the negative electrode current collector relative to a width Wn of the negative electrode may be within a range of 0.05 to 0.5 (for example, within a range of 0.2 to 0.5) or within a range of 0.05 to 0.4 (for example, within a range of 0.1 to 0.3).

There is no particular limitation on constituent elements other than the constituent elements described above, and constituent elements used in known non-aqueous electrolyte secondary batteries can be used. Examples of the constituent elements of the secondary battery (B) will be described below. However, the constituent elements of the secondary battery (B) are not limited to the examples described below.

The secondary battery (B) includes an outer casing, and an electrode group and a non-aqueous electrolyte that are housed in the outer casing. The electrode group is formed by spirally winding a positive electrode and a negative electrode with a separator being provided between the positive electrode and the negative electrode. That is, the electrode group is a spirally-wound type electrode group. The positive electrode, the negative electrode, and the separator each have a strip-shape.

### (Positive Electrode)

As described above, the positive electrode includes a positive electrode current collector and a positive electrode material mixture layer provided on the positive electrode current collector. There is no particular limitation on the material for the positive electrode current collector and the material for positive electrode material mixture layer, and materials used in the positive electrodes of known non-aqueous electrolyte secondary batteries may be used.

Examples of the material for the positive electrode current collector, metal materials including Al, Ti, Fe, and the like may be included. As the metal material, Al, an Al alloy, Ti, a Ti alloy, an Fe alloy, or the like may be used. The Fe alloy may be stainless steel (SUS).

As the positive electrode active material, a material that reversibly absorbs and desorbs lithium ions can be used. Examples of the positive electrode active material include a composite oxide that contains lithium and a metal element Me other than lithium, a transition metal fluoride, a polyanion, a fluorinated polyanion, a transition metal sulfide, and the like. The composite oxide that contains lithium and the metal element Me may be a lithium-containing transition metal oxide that contains at least a transition metal as the metal element Me. From the viewpoint of low production cost and a high average discharge voltage, the lithium-containing transition metal oxide is preferably used as the positive electrode active material.

Examples of the transition metal element contained in the lithium-containing transition metal oxide include Sc, Ti, V, Cr, Mn, Fe, Co, Ni, Cu, Y, Zr, W, and the like. The lithium-containing transition metal oxide may contain only one transition metal element or two or more transition metal elements. It is preferable that the lithium-containing transition metal oxide contains at least one element selected from the group consisting of Ni, Co, Mn, and Al.

There is no particular limitation on additives (a binder and a conductive material) other than the positive electrode active material, and known additives may be used. As the conductive material, a conductive carbon material may be used. Examples of the conductive carbon material include carbon black, a carbon nanotube, graphite. Examples of the binder include a fluorine resin, polyacrylonitrile, a polyimide resin, an acrylic resin, a polyolefin resin, and a rubbery polymer. Examples of the fluorine resin include polytetrafluoroethylene, and polyvinylidene fluoride.

There is no particular limitation on the method for producing the positive electrode, and the positive electrode can be produced using a known method. In one example of the production method, first, a positive electrode material mixture slurry is prepared by mixing a positive electrode active material, additives (a conductive material, a binder, and the like), and a dispersion medium (for example, an organic solvent). Next, the positive electrode material mixture slurry is applied to both sides of a positive electrode current collector to form a stacked body of the positive electrode current collector and coating films made of the positive electrode material mixture slurry. Next, after the coating films have been dried, the stacked body is rolled. In this way, a positive electrode is obtained. There is no particular limitation on the method for forming the notches in the positive electrode. The notches may be formed by punching out the positive electrode using punch processing or the like after the positive electrode has been formed. There is no particular limitation on the method for forming the positive electrode current collector exposed portion. The positive electrode current collector exposed portion may be formed by, after the positive electrode has been formed, removing a portion of the positive electrode material mixture layers.

### (Negative Electrode)

As described above, the negative electrode includes a negative electrode current collector and a negative electrode material mixture layer provided on the negative electrode current collector. There is no particular limitation on the material for the negative electrode current collector and the material for the negative electrode material mixture layer, and materials used in the negative electrodes of known non-aqueous electrolyte secondary batteries may be used.

Examples of the material for the negative electrode current collector include copper and a copper alloy. The negative electrode current collector may be a copper foil or a copper alloy foil.

As the negative electrode active material, a material that reversibly absorbs and desorbs lithium ions can be used. Examples of the negative electrode active material include a carbonaceous material, a Si-containing material, a Sn-containing material, and the like. The negative electrode may contain one negative electrode active material or a combination of two or more negative electrode active materials. Examples of the carbonaceous material include graphite, graphitizable carbon (soft carbon), non-graphitizable carbon (hard carbon), and the like.

There is no particular limitation on additives (a binder and a conductive material) other than the negative electrode active material, and known additives may be used. As the conductive material and the binder, materials listed as examples of the conductive material and the binder used in the positive electrode material mixture layer may be used.

There is no particular limitation on the method for producing the negative electrode, and the negative electrode can be produced using a known method. In one example of the production method, first, a negative electrode material mixture slurry is prepared by mixing a negative electrode active material, additives (a conductive material, a binder, and the like), and a dispersion medium (for example, an organic solvent). Next, the negative electrode material mixture slurry is applied to a negative electrode current collector to form a stacked body of the negative electrode current collector and coating films made of the negative electrode material mixture slurry. Next, after the coating films have been dried, the stacked body is rolled. In this way, a negative electrode is obtained. There is no particular limitation on the method for forming the negative electrode current collector exposed portion. The negative electrode current collector exposed portion may be formed by, after the negative electrode has been formed, removing a portion of the negative electrode material mixture layers.

### (Separator)

As the separator, an ion-permeable and insulating porous sheet is used. Examples of the porous sheet include a microporous thin film, a woven fabric, a nonwoven fabric, and the like. There is no particular limitation on the material for the separator, and a polymer material may be used. Examples of the polymer material include an olefin resin, a polyamide resin, a cellulose. Examples of the olefin resin include polyethylene, polypropylene, a copolymer of ethylene and propylene. The separator may contain additives (an inorganic filler and the like) as needed. There is no particular limitation on the thickness of the separator, and the thickness of the separator may be 10 µm or more or 16 µm or more, and may be 30 µm or less or 20 µm or less.

### (Non-aqueous Electrolyte)

As the non-aqueous electrolyte, a lithium ion conductive non-aqueous electrolyte can be used. There is no particular limitation on the non-aqueous electrolyte, and a non-aqueous electrolyte used in known non-aqueous electrolyte secondary batteries may also be used. The non-aqueous electrolyte contains, for example, a non-aqueous solvent, and a lithium ion and an anion that are dissolved in the non-aqueous solvent. The non-aqueous electrolyte may be in the form of a liquid or a gel.

The non-aqueous electrolyte in the form of a liquid is prepared by dissolving a lithium salt in the non-aqueous solvent. By the lithium salt dissolving into the non-aqueous solvent, the lithium ion and the anion are generated.

Examples of the non-aqueous solvent include an ester, an ether, a nitril, an amide, a halogenated form thereof. The non-aqueous electrolyte may contain only one or a combination of two or more of the non-aqueous solvents listed above. The halogenated form may be a fluoride or the like. As the lithium salt, LiPF₆, or any other lithium salt can be used. The concentration of the lithium salt in the non-aqueous electrolyte may be 0.5 mol/L or more and 3.5 mol/L or less.

### (Negative Electrode Lead and Positive Electrode Lead)

As described above, as the negative electrode lead, a lead made of a metal that can be used as the negative electrode lead can be used. The negative electrode lead may have a width of 1 mm or more or 2 mm or more, and 5 mm or less or 4 mm or less. The secondary battery (B) usually includes only one negative electrode lead.

As the positive electrode lead, a lead made of a metal that can be used as the positive electrode lead can be used. For example, as the positive electrode lead, a thin metal plate made of aluminum or an aluminum alloy can be used. The positive electrode lead may have a width of 1 mm or more or 2 mm or more, and 5 mm or less or 4 mm or less. The positive electrode lead may have a thickness of 100 µm or more or 120 µm or more, and 200 µm or less or 180 µm or less. The secondary battery (B) usually includes only one positive electrode lead.

There is no particular limitation on the method for connecting the positive electrode lead to the positive electrode current collector and the method for connecting the negative electrode lead to the negative electrode current collector, and a known method (for example, welding) may be used. The positive electrode lead may be connected to an inner circumferential surface or an outer circumferential surface out of both sides of the positive electrode current collector. The negative electrode lead may be connected to an inner circumferential surface or an outer circumferential surface out of both sides of the negative electrode current collector.

### (Outer Casing)

In the outer casing (battery case), the electrode group and the non-aqueous electrolyte are housed. There is no particular limitation on the outer casing, and a known outer casing may be used. The outer casing usually includes an outer casing can and a sealing body that seals an opening of the outer casing can. The outer casing can functions as a negative electrode terminal, and the sealing body functions as a positive electrode terminal. The sealing body may include a sealing plate and a gasket.

There is no particular limitation on the method for producing the secondary battery (B), and the secondary battery (B) may be produced using a process used in a known production method. In one example of the production method, first, each constituent element is prepared. A negative electrode lead is connected to a negative electrode, and the negative electrode lead is covered with a protection tape as needed. A positive electrode lead is connected to a positive electrode. Next, the positive electrode and the negative electrode are spirally wound together with a separator to produce an electrode group. Next, the electrode group is housed in an outer casing together with a non-aqueous electrolyte. At this time, one end of the positive electrode lead is connected to a sealing body, and one end of the negative electrode lead is connected to the outer casing can. In this way, a secondary battery (B) can be produced.

Hereinafter, one example of the secondary battery (B) according to the present disclosure will be described with reference to the drawings. As the constituent elements of the example of the secondary battery (B) described below, the constituent elements described above can be used. Also, the constituent elements of the example of the secondary battery (B) can be changed based on the foregoing description. Also, the matters described in the following description may also be applied to the above-described embodiment. Also, in the example of the secondary battery (B) described below, the constituent elements that are not essential to the secondary battery (B) of the present disclosure may be omitted.

### (Embodiment 1)

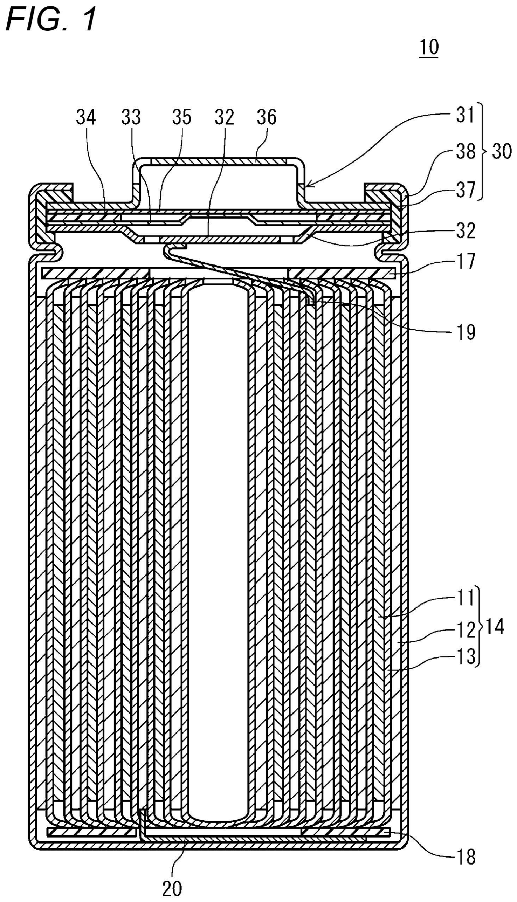

FIG. 1 is a cross-sectional view schematically showing a cross section of one example of a non-aqueous electrolyte secondary battery (for example, a lithium ion secondary battery) according to Embodiment 1. A non-aqueous electrolyte secondary battery 10 shown in FIG. 1 is a cylindrical battery. The secondary battery 10 includes a bottomed cylindrical outer casing (battery case) 30, and a spirally-wound type electrode group 14 and a non-aqueous electrolyte (not shown) that are housed in the outer casing 30. The outer casing 30 includes an outer casing can 38 and a sealing body (a sealing plate 31 and a gasket 37) that seals an opening of the outer casing can 38. The outer casing can 38 is a bottomed cylindrical case made of a metal. The gasket 37 is provided between the outer casing can 38 and the sealing plate 31. In the outer casing can 38, insulating plates 17 and 18 are provided on opposite ends of the electrode group 14, respectively.

The sealing plate 31 includes a filter 32, a lower valve 33, an insulating member 34, an upper valve 35, and a cap 36. The members other than the insulating member 34 are electrically connected to each other.

The electrode group 14 is formed by spirally winding a positive electrode 11 and a negative electrode 12 with a separator 13 being provided between the positive electrode 11 and the negative electrode 12. The positive electrode 11, the negative electrode 12, and the separator 13 each have a strip-shape. The positive electrode 11 includes a positive electrode current collector and positive electrode material mixture layers formed on both sides of the positive electrode current collector. The negative electrode 12 includes a negative electrode current collector and negative electrode material mixture layers formed on both sides of the negative electrode current collector.

One end of a positive electrode lead 19 is connected to the positive electrode 11, and another end of the positive electrode lead 19 is connected to the filter 32. That is, the positive electrode 11 is electrically connected to the cap 36 that also functions as a positive electrode terminal. One end of a negative electrode lead 20 is connected to the negative electrode 12, and another end of the negative electrode lead 20 is connected to the outer casing can 38 that also functions as a negative electrode terminal.

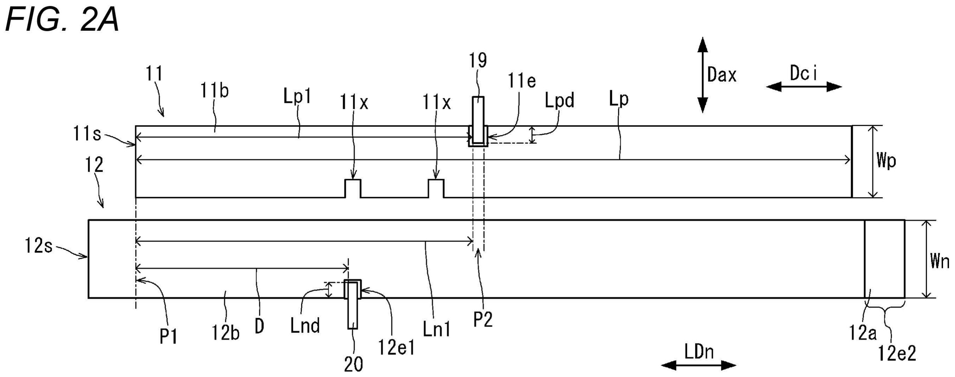

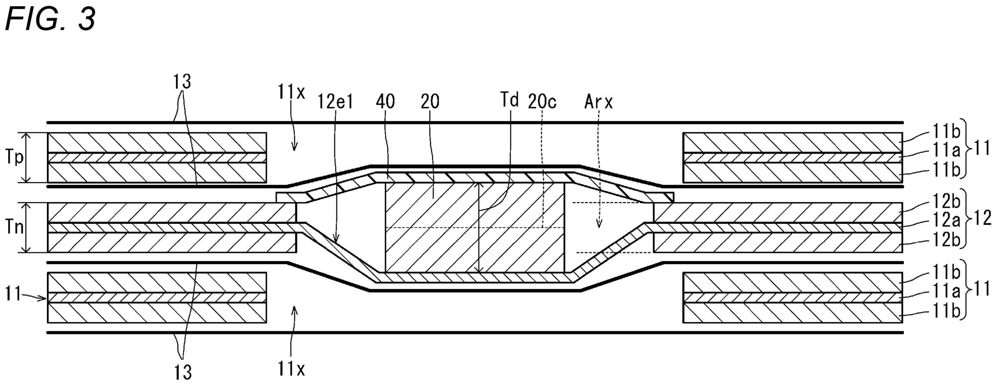

The positive electrode 11 and the negative electrode 12 have the above-described configurations. A top view of the positive electrode 11 and the negative electrode 12 in a state in which the electrode group 14 is stretched out is schematically shown in FIG. 2A. In FIG. 2A, an illustration of a protection tape 40 (see FIG. 3) is omitted. In FIG. 2A, the negative electrode 12 is shown displaced in an axial direction Dax of the electrode group 14. In FIG. 2A, the positions of the positive electrode 11 and the negative electrode 12 are not displaced in a circumferential direction Dci (the lengthwise direction of the positive electrode 11 and the negative electrode 12). In FIG. 2A, the left side is the side from which the electrode group 14 starts to be wound. In one example shown in FIG. 2A, a winding start end 12s of the negative electrode 12 starts to be wound prior to a winding start end 11s of the positive electrode 11.

The positive electrode 11 includes a positive electrode current collector 11a and a positive electrode material mixture layer 11b provided on each side of the positive electrode current collector 11a (see FIG. 3). The positive electrode 11 includes, in a portion thereof on one side (the sealing plate 31 side) of the electrode group 14 in the axial direction Dax of the electrode group 14, a positive electrode current collector exposed portion 11e in which the positive electrode material mixture layer 11b is not provided. One end of the positive electrode lead 19 is connected to the positive electrode current collector exposed portion 11e. As described above, another end of the positive electrode lead 19 is electrically connected to the sealing plate 31. In the example shown in FIG. 2A, the length Lpd of a portion of the positive electrode lead 19 that is in contact with the positive electrode current collector 11a is smaller than the width Wp of the positive electrode 11.

The ratio Lp1/Lp that is the ratio of the distance Lp1 from the winding start end 11s of the positive electrode 11 to the positive electrode lead 19 relative to the length Lp in the lengthwise direction of the positive electrode 11 may be within the above-described range.

The positive electrode 11 includes two notches 11x. In the electrode group 14, the notches 11x are formed at positions that face the negative electrode lead 20 across the separator 13 (more specifically, across the separator 13 and the negative electrode current collector or the protection tape). The two notches 11x are spaced apart by a distance corresponding to about a single winding of the positive electrode 11. In the electrode group 14, one of the notches 11x is provided at a position on an inner circumferential side of the negative electrode lead 20, and the other notch 11x is provided at a position on an outer circumferential side of the negative electrode lead 20.

The negative electrode 12 includes a negative electrode current collector 12a and a negative electrode material mixture layer 12b provided on each side of the negative electrode current collector 12a. The negative electrode 12 includes, in a portion thereof on another side (the bottom side of the outer casing can 38) of the electrode group 14 in the axial direction Dax of the electrode group 14, a first negative electrode current collector exposed portion 12e1 in which the negative electrode material mixture layer 12b is not provided. One end of the negative electrode lead 20 is connected to the first negative electrode current collector exposed portion 12e1. As described above, the other end of the negative electrode lead 20 is connected to the outer casing can 38. In the example shown in FIG. 2A, the length Lnd of a portion of the negative electrode lead 20 that is in contact with the negative electrode current collector 12a is smaller than the width Wn of the negative electrode 12.

The negative electrode 12 includes a second negative electrode current collector exposed portion 12e2 in at least a portion of an outermost circumference of the negative electrode 12. The second negative electrode current collector exposed portion 12e2 is in contact with an inner surface (inner circumferential surface) of the outer casing can 38. The second negative electrode current collector exposed portion 12e2 is usually formed to extend entirely across the negative electrode 12 in the width direction of the negative electrode 12.

As shown in FIG. 2A, in the state in which the electrode group 14 is stretched out, the first negative electrode current collector exposed portion 12e1 is provided at a position between a first position P1 and a second position P2 in a lengthwise direction LDn of the negative electrode 12. The first position P1 is a position that faces the winding start end 11s of the positive electrode 11 across the separator 13. The second position P2 is a position that faces the positive electrode lead 19 across the separator 13 (or across the separator 13 and the positive electrode 11). The ratio D/Ln1 that is the ratio of the distance D between the first position P1 and the negative electrode lead 20 relative to the distance Ln1 between the first position P1 and the second position P2 may be within the above-described range.

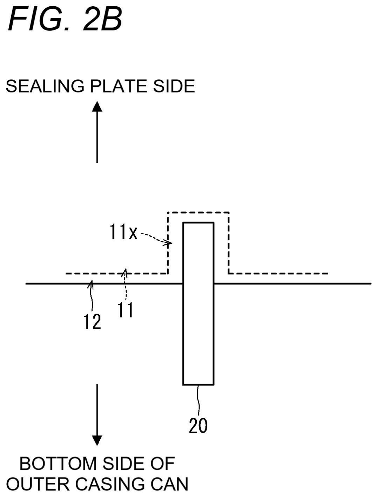

The position and the size of the negative electrode lead 20 and the notch 11x are schematically shown in FIG. 2B when the vicinity of the negative electrode lead 20 is viewed in a see-through manner from the radial direction of the electrode group 14. In one example shown in FIG. 2B, the width Wn of the negative electrode 12 is larger than the width Wp of the positive electrode 11. The position and size of the notch 11x are set such that the negative electrode lead 20 does not overlap the positive electrode (a portion of the positive electrode other than the notch) when viewed in a see-through manner from the radial direction of the electrode group 14. One end of the negative electrode lead 20 is provided within the notch 11x.

A cross-sectional view of the vicinity of the negative electrode lead 20 in the state in which the electrode group 14 is stretched out is schematically shown in FIG. 3. In the actual electrode group 14, the positive electrode 11, the negative electrode 12, and the separator 13 are curved in an arc shape, but for the sake of ease of understanding, in FIG. 3, the positive electrode 11, the negative electrode 12, and the separator 13 are shown as linear. Also, in FIG. 3, the separator 13 is shown by a thick line. The cross-sectional view shown in FIG. 3 is a cross section that passes through the notches 11x and the negative electrode lead 20 and is perpendicular to the axial direction Dax of the electrode group 14. As shown in FIG. 3, a protection tape 40 is attached to the negative electrode 12. The protection tape 40 is attached to the negative electrode 12 to cover the negative electrode lead 20. A portion of the negative electrode lead 20 is provided at a position between the negative electrode current collector 12a (the first negative electrode current collector exposed portion 12e1) and the protection tape 40.

As shown in FIG. 3, the thickness Td of the negative electrode lead 20 is larger than the thickness Tn of the negative electrode 12. In one example shown in FIG. 3, the thickness Tp of the positive electrode 11, the thickness Tn of the negative electrode 12, and the thickness Td of the negative electrode lead 20 satisfy Tn < Td < (2Tp + Tn). In the example shown in FIG. 3, the negative electrode current collector 12a is bent such that the first negative electrode current collector exposed portion 12e1 protrudes toward the side opposite to the side where the negative electrode lead 20 is provided. Specifically, the first negative electrode current collector exposed portion 12e1 is bent such that both sides of the negative electrode lead 20 respectively protrude from both sides of the negative electrode 12. A center 20c of the negative electrode lead 20 in the thickness direction is located in a region Arx when it is assumed that the negative electrode material mixture layer 12b is formed on the first negative electrode current collector exposed portion 12e1.

In the example shown in FIG. 3, both sides of the negative electrode lead 20 do not protrude beyond the adjacent notches 11x. Furthermore, in the example shown in FIG. 3, the negative electrode current collector 12a and the protection tape 40 that enclose the negative electrode lead 20 do not protrude beyond the adjacent notches 11x.

With the secondary battery 10 according to Embodiment 1, the above-described advantageous effects can be obtained.

### (Additional Statement)

### (Technology 1)

A non-aqueous electrolyte secondary battery that has a cylindrical shape, the non-aqueous electrolyte secondary battery including:
an electrode group formed by spirally winding a positive electrode, a negative electrode, and a separator;
a non-aqueous electrolyte;
a cylindrical outer casing can that houses the electrode group and the non-aqueous electrolyte;
a positive electrode lead; and
a negative electrode lead,
wherein the positive electrode includes a positive electrode current collector and a positive electrode material mixture layer provided on the positive electrode current collector,
the negative electrode includes a negative electrode current collector and a negative electrode material mixture layer provided on the negative electrode current collector,
one end of the positive electrode lead is connected to a positive electrode current collector exposed portion of the positive electrode current collector in which the positive electrode material mixture layer is not provided,
another end of the positive electrode lead protrudes from one end of the electrode group in an axial direction of the electrode group and is electrically connected to a positive electrode terminal,
one end of the negative electrode lead is connected to a first negative electrode current collector exposed portion of the negative electrode current collector in which the negative electrode material mixture layer is not provided,
another end of the negative electrode lead protrudes from another end of the electrode group in the axial direction and is electrically connected to the outer casing can,
the negative electrode includes a second negative electrode current collector exposed portion in at least a portion of an outermost circumference of the negative electrode,
the second negative electrode current collector exposed portion is in contact with an inner surface of the outer casing can,
in a stretched-out state of the electrode group, the negative electrode lead is provided at a position between a first position of the negative electrode and a second position of the negative electrode in a lengthwise direction of the negative electrode, the first position being a position that faces a winding start end of the positive electrode across the separator, and the second position being a position that faces the positive electrode lead across the separator,
the positive electrode includes a notch at each of two positions that face the negative electrode lead across the separator, and
a thickness Td of the negative electrode lead is larger than a thickness Tn of the negative electrode.

### (Technology 2)

The non-aqueous electrolyte secondary battery in accordance with technology 1,
wherein a ratio Lp1/Lp that is a ratio of a length Lp in a lengthwise direction of the positive electrode and a distance Lp1 from the winding start end of the positive electrode to the positive electrode lead is within a range of 0.4 to 0.6.

### (Technology 3)

The non-aqueous electrolyte secondary battery in accordance with technology 2,
wherein a ratio D/Ln1 that is a ratio of a distance Ln1 between the first position and the second position and a distance D between the first position and the negative electrode lead is within a range of 0.35 to 0.95.

### (Technology 4)

The non-aqueous electrolyte secondary battery in accordance with any one of technologies 1 to 3, further including:
a protection tape that is attached to the negative electrode to cover the negative electrode lead,
wherein a portion of the negative electrode lead is provided between the negative electrode current collector and the protection tape.

### (Technology 5)

The non-aqueous electrolyte secondary battery in accordance with any one of technologies 1 to 4,
wherein a thickness Tp of the positive electrode, the thickness Tn of the negative electrode, and the thickness Td of the negative electrode lead satisfy Td < (2Tp + Tn).

### [Industrial Applicability]

The present disclosure is applicable to a non-aqueous electrolyte secondary battery.

The present invention has been described in terms of the presently preferred embodiment, but the disclosure should not be interpreted as limiting. Various alterations and modifications will no doubt become apparent to those skilled in the art to which the present invention pertains, after having read the disclosure. Accordingly, it is to be understood that the appended claims be interpreted as covering all alterations and modifications which fall within the true spirit and scope of the present invention.

### [Reference Signs List]

10: non-aqueous electrolyte secondary battery, 11: positive electrode 11a: positive electrode current collector, 11b: positive electrode material mixture layer, 11e: positive electrode current collector exposed portion, 11x: notch, 12: negative electrode 12a: negative electrode current collector, 12b: negative electrode material mixture layer, 12e1: first negative electrode current collector exposed portion, 12e2: second negative electrode current collector exposed portion, 13: separator, 14: electrode group, 19: positive electrode lead, 20: negative electrode lead, 38: outer casing can, 40: protection tape

## Claims

1. A non-aqueous electrolyte secondary battery that has a cylindrical shape, the non-aqueous electrolyte secondary battery comprising:
an electrode group formed by spirally winding a positive electrode, a negative electrode, and a separator;
a non-aqueous electrolyte;
a cylindrical outer casing can that houses the electrode group and the non-aqueous electrolyte;
a positive electrode lead; and
a negative electrode lead,
wherein the positive electrode includes a positive electrode current collector and a positive electrode material mixture layer provided on the positive electrode current collector,
the negative electrode includes a negative electrode current collector and a negative electrode material mixture layer provided on the negative electrode current collector,
one end of the positive electrode lead is connected to a positive electrode current collector exposed portion of the positive electrode current collector in which the positive electrode material mixture layer is not provided,
another end of the positive electrode lead protrudes from one end of the electrode group in an axial direction of the electrode group and is electrically connected to a positive electrode terminal,
one end of the negative electrode lead is connected to a first negative electrode current collector exposed portion of the negative electrode current collector in which the negative electrode material mixture layer is not provided,
another end of the negative electrode lead protrudes from another end of the electrode group in the axial direction and is electrically connected to the outer casing can,
the negative electrode includes a second negative electrode current collector exposed portion in at least a portion of an outermost circumference of the negative electrode,
the second negative electrode current collector exposed portion is in contact with an inner surface of the outer casing can,
in a stretched-out state of the electrode group, the negative electrode lead is provided at a position between a first position of the negative electrode and a second position of the negative electrode in a lengthwise direction of the negative electrode, the first position being a position that faces a winding start end of the positive electrode across the separator, and the second position being a position that faces the positive electrode lead across the separator,
the positive electrode includes a notch at each of two positions that face the negative electrode lead across the separator, and
a thickness Td of the negative electrode lead is larger than a thickness Tn of the negative electrode.

2. The non-aqueous electrolyte secondary battery in accordance with claim 1,
wherein a ratio Lp1/Lp that is a ratio of a length Lp in a lengthwise direction of the positive electrode and a distance Lp 1 from the winding start end of the positive electrode to the positive electrode lead is within a range of 0.4 to 0.6.

3. The non-aqueous electrolyte secondary battery in accordance with claim 2,
wherein a ratio D/Ln1 that is a ratio of a distance Ln1 between the first position and the second position and a distance D between the first position and the negative electrode lead is within a range of 0.35 to 0.95.

4. The non-aqueous electrolyte secondary battery in accordance with claim 1 or 2, further comprising:
a protection tape that is attached to the negative electrode to cover the negative electrode lead,
wherein a portion of the negative electrode lead is provided between the negative electrode current collector and the protection tape.

5. The non-aqueous electrolyte secondary battery in accordance with claim 1 or 2,
wherein a thickness Tp of the positive electrode, the thickness Tn of the negative electrode, and the thickness Td of the negative electrode lead satisfy Td < (2Tp + Tn).
